# EUROPEAN PATENT SPECIFICATION

(11) **EP 3 803 094 B1**
(45) Date of publication and mention of the grant of the patent: **22.02.2023**
(21) Application number: 19730226.8
(22) Date of filing: 29.05.2019
(51) Int. Cl.: F02M 35/02, F02M 35/024, B01D 46/24, B01D 46/00, F02M 35/10, B01D 46/58

(54) **AIR FILTRATION DEVICE**
LUFTFILTER
FILTRE À AIR

(30) Priority: 06.06.2018 IT 201800006072
(43) Date of publication of application: 14.04.2021
(73) Proprietor: UFI Innovation Center S.r.l., 38061 Ala (Trento) (IT)
(72) Inventor: GIRONDI, Giorgio, 38061 Ala, Trento (IT)
(74) Representative: Gamba, Alessandro
(86) International application number: PCT/IB2019/054432
(87) International publication number: WO 2019/234556

(56) References cited:
- WO-A1-2007/062715
- DE-U1-202006 003 137
- US-A- 3 864 109
- US-A1- 2011 067 574

## Description

### Field of application

The present invention relates to an air filtration device and an air suction system of a vehicle engine comprising said air filtration device. In addition, the present invention relates to a suction method of filtered air of an air suction system of a vehicle engine through said air filtration device.

The context which the present invention lies in is the automotive sector. In particular, the present invention refers specifically to the air which, once aspirated, enters the combustion chamber of the internal combustion engine.

### State of the art

In the state of the art solutions of air suction systems of a vehicle engine are known of which draw in air from the external environment to convey it to the internal combustion chamber of the relative endothermic engine.

Such systems typically comprise filtration devices suitable to filter the dispersed particles from the air, preventing the access of unwanted material inside the combustion chamber, such as dirt or dust.

In order to improve the functioning and performance of the internal combustion engine, it is essential for such systems to allow the greatest possible quantity of air to enter, at the same time effectively filtering it.

To achieve this objective it is therefore essential that the filtration device has the widest possible filtering surface and that such surface at the same time performs effective filtration.

To overcome this problem, in the state of the art, solutions for air filtration devices have been developed which comprise box-shaped bodies containing a plurality of air filters, typically of the tubular type, suitable to operate in parallel with each other.

However, such known solutions have as their main drawback that of having a particularly complex and above all bulky geometry.

An example of such known solutions is, for example, shown in document number WO2013/057549 in the name of the Applicant. Another example is also known in document US2011/067574A1.

### Solution according to the invention

The need is therefore strongly felt to have an air filtration device which maximizes the flow rate of effectively filtered air to the engine while minimizing its overall dimensions inside the vehicle, for example inside the engine compartment.

The purpose of the present invention is therefore to provide an air filtration device which satisfies these requirements, overcoming the drawbacks of the prior art mentioned above.

Such purpose is achieved by an air filtration device according to claim 1, by means of an air suction system of a vehicle engine which comprises said air filtration device according to claim 14. In addition, such purpose is also achieved by the suction method of filtered air according to claim 15. The dependent claims show preferred embodiment variants having further advantageous aspects.

### Description of the drawings

Further characteristics and advantages of the invention will, in any case, be evident from the description given below of its preferred embodiments, made by way of a non-limiting example with reference to the appended drawings, wherein:

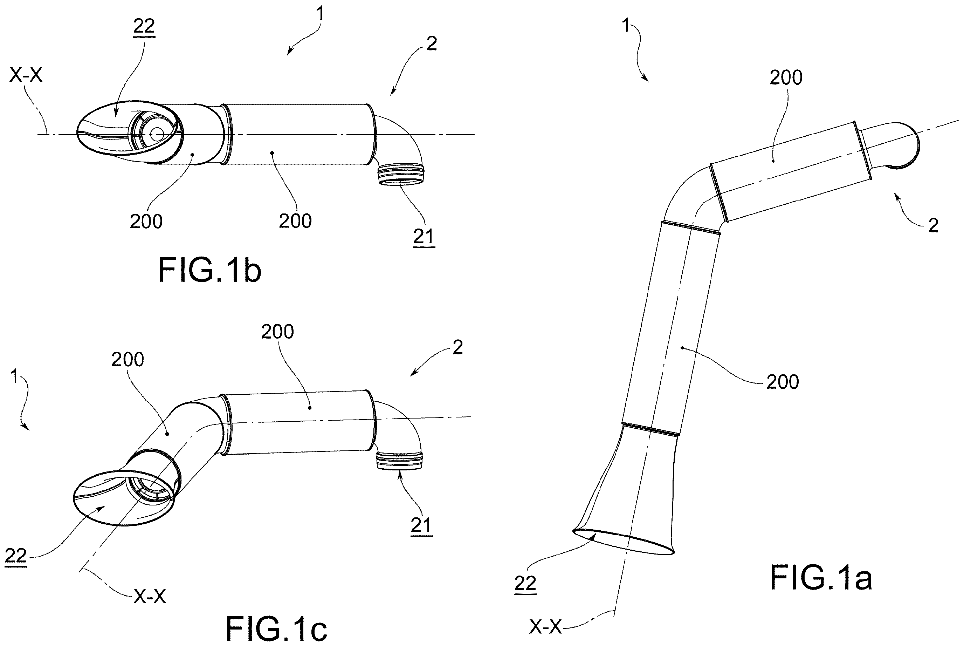

- figures 1a 1b, and 1c shows three perspective views of an air filtration device according to a preferred embodiment;

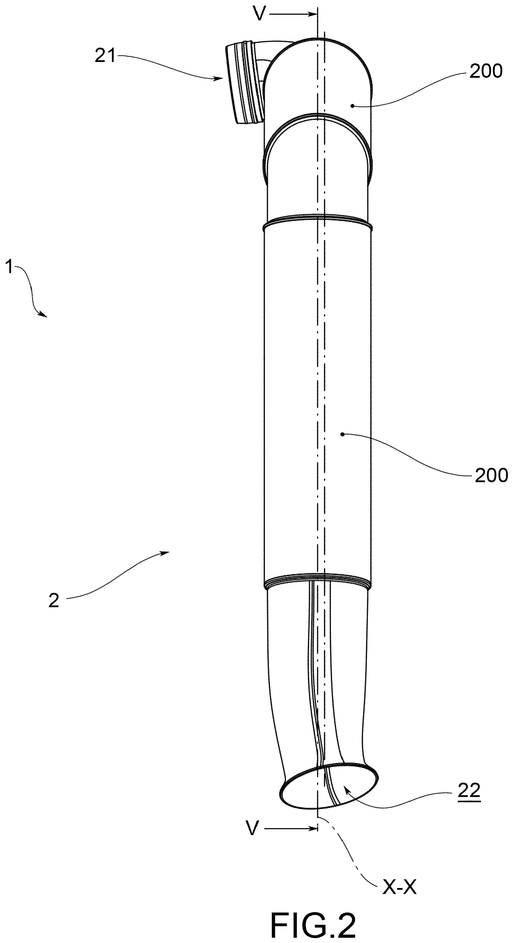

- figure 2 shows a side view of the air filtration device shown in figures 1a, 1b and 1c;

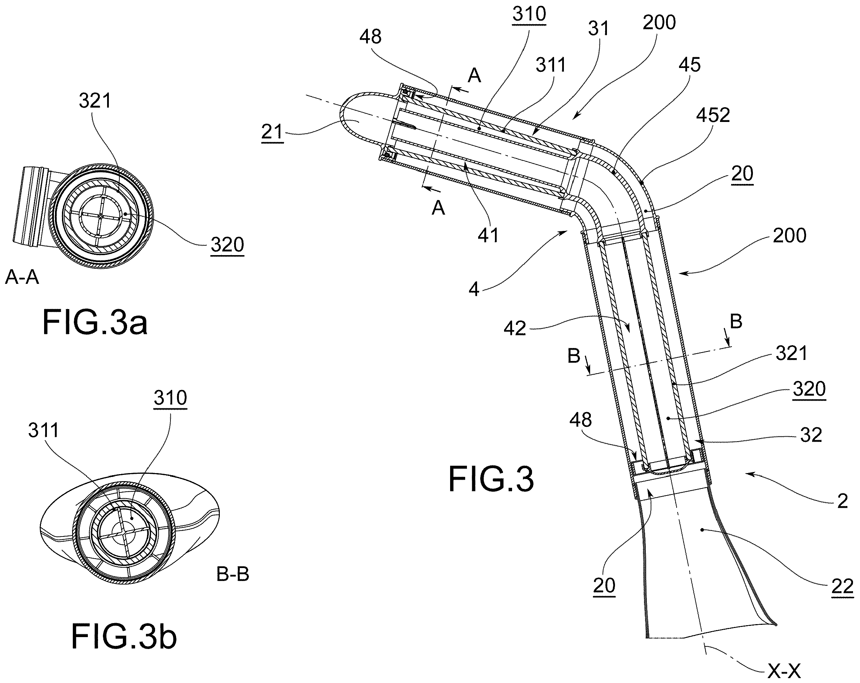

- figure 3 shows a cross-section view of the filtration device according to the cross-section plane V-V shown in figure 2;
- figures 3a and 3b are two cross-section views of the filtration device respectively according to the cross-section planes A-A and B-B shown in figure 3;

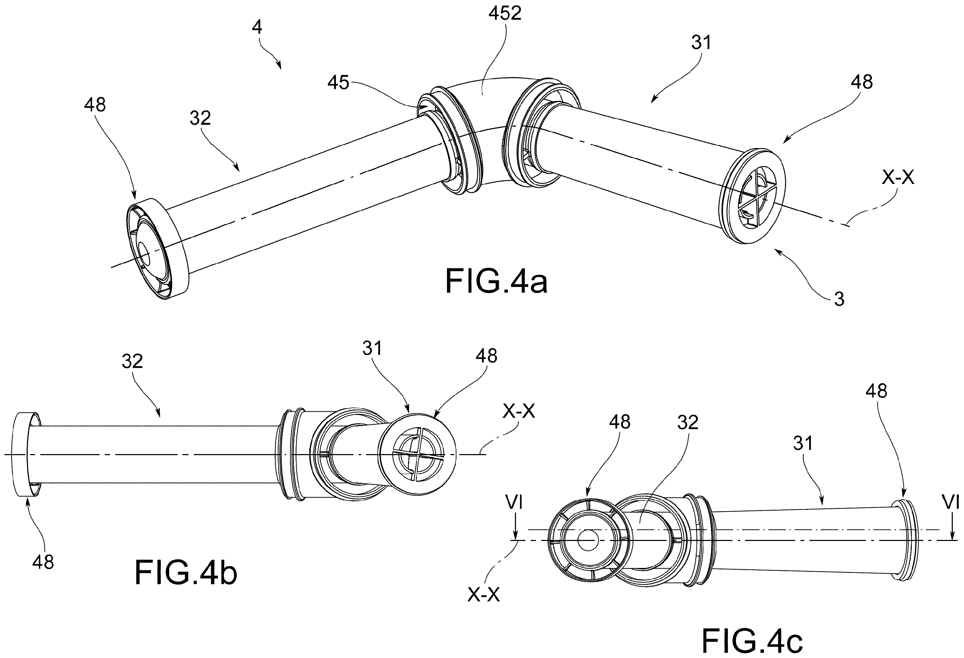

- figures 4a, 4b and 4c show a perspective view and two side views of some components of the air filtration device shown in the previous figures;

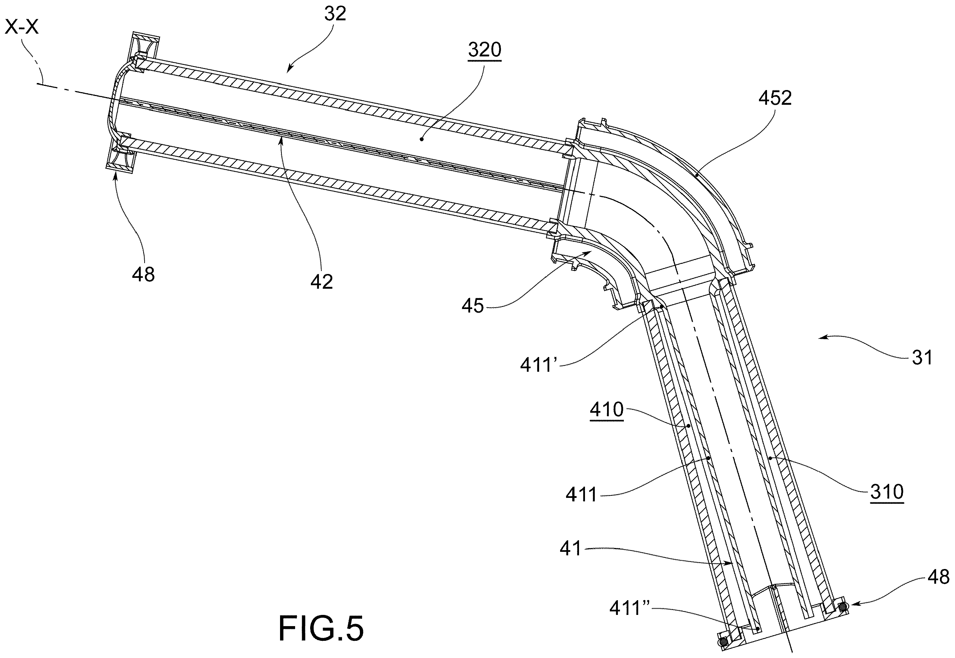

- figure 5 shows a cross-section view according to the cross-section plane VI-VI in figure 4c;

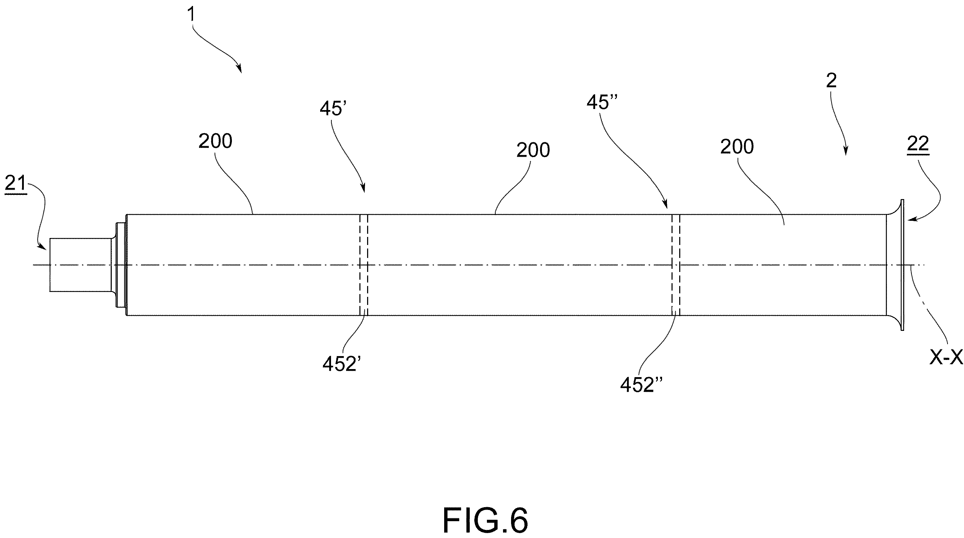

- figure 6 shows a side view of an air filtration device according to the present invention, in a further embodiment;

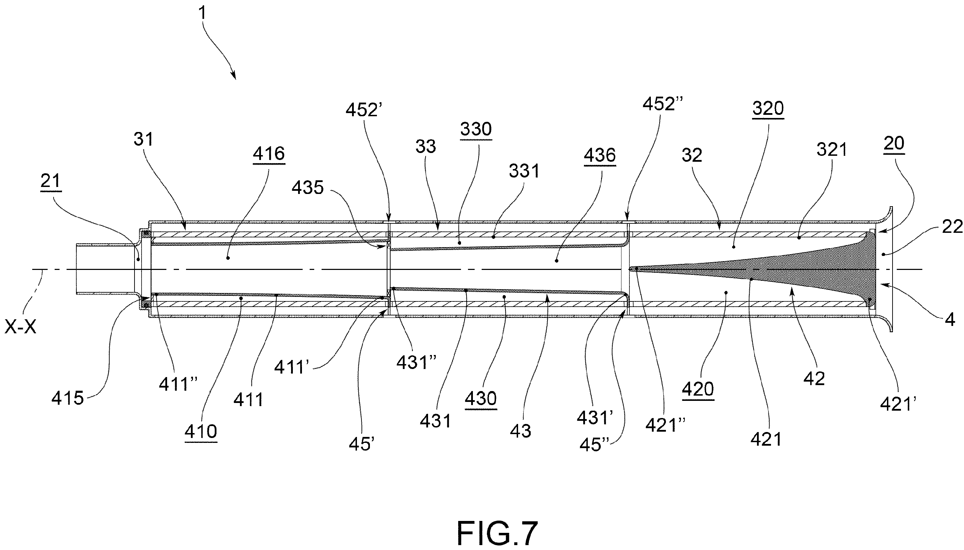

- figure 7 shows a cross-section view according to the cross-section plane in figure 6;
- figures 8a and 8b are a perspective view and a cross-section view of an embodiment variant of the filtration device;
- figure 9 is a cross-section view of a further embodiment variant of the filtration device.

### Detailed description

With reference to the appended drawings, reference numeral 1 denotes an air filtration device 1 of an air suction system of a vehicle engine in its entirely.

In particular, the air filtration device 1 according to the present invention finds application in the automotive sector, being positioned upstream of an engine, in particular fluidically engageable to a suction system duct, to allow the filtered suction of a predefined quantity of air as far as the combustion chamber of the engine: the air filtration device 1 is suitable to allow the filtered suction of a predefined air flow rate needed for the engine to function properly.

According to a preferred embodiment, the air filtration device 1 has a main direction of extension along a main axis X-X, thus identifying a main dimension compared to the others.

Preferably, as shown also in the appended drawings, according to a preferred embodiment, the main axis X-X extends in a single direction, that is along a single straight line.

According to other preferred embodiments, the main axis X-X extends in several directions, identifying different linear sections. In a preferred embodiment, said linear sections lie on the same plane. In other preferred embodiments, said linear sections lie on different planes.

According to the present invention, the air filtration device 1 comprises a suction manifold 2 extending in length along the main axis X-X between a first end and a second end. Preferably, at the first end an outlet mouth 21 is made fluidically engageable to a system suction duct comprised in the engine air suction system. Preferably, but not necessarily, at the second end an inlet mouth 22 facing and fluidly connected to the external environment is provided; in some embodiments, the inlet mouth 22 is made in the suction manifold 2 in an axial position comprised between the first end and the second end.

According to the present invention, the suction manifold 2 is a substantially tubular body, suitable to convey the air from the environment to the system suction duct. According to a preferred embodiment, at the inlet mouth 22, the suction manifold 2 comprises a conveying funnel suitable to conveying the aspirated air inside the suction manifold 2. Preferably, at the outlet mouth 21, a suitable connection, which is engageable to a system suction duct, is provided or is comprised.

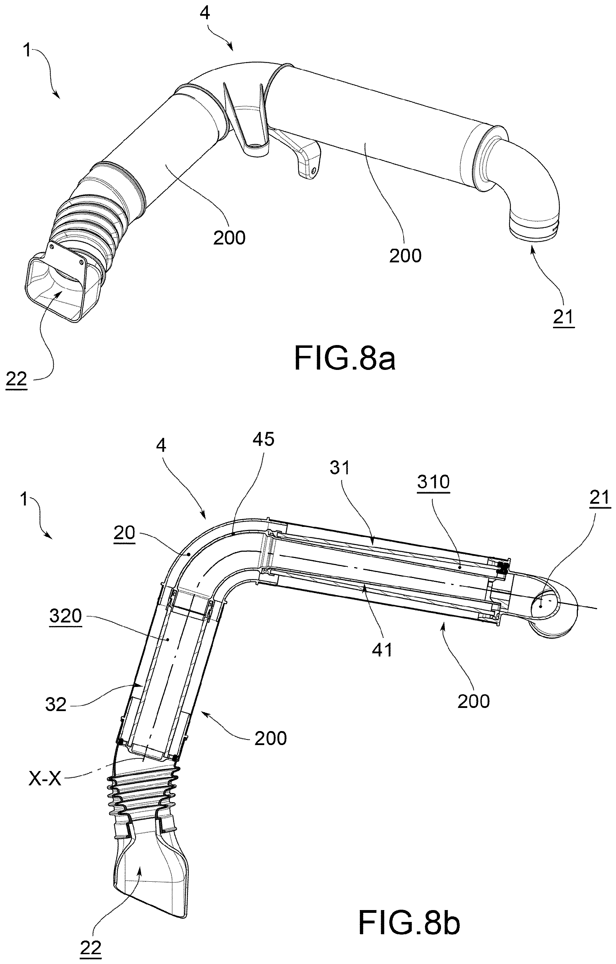

According to a preferred embodiment at the inlet mouth 22, the suction manifold 2 comprises an attachment element to the vehicle and an elastic element for decoupling the vibrations coming from the engine such as, for example, a bellows (as shown by way of example in figures 8a and 8b).

Preferably, depending on the type of main axis X-X, the suction manifold 2 identifies one or more suction manifold tubular sections 200. Preferably, said suction manifold tubular sections 200 are mutually aligned along the main axis X-X or each extend along a respective different linear section

According to a preferred embodiment, one or more suction manifold tubular sections 200 are made of porous material in non-woven fabric composed of synthetic fibres or generically in a sound-absorbent material.

According to a preferred embodiment, one or more suction manifold tubular sections 200 are made of a plastic material, which is machinable by moulding/blowing, and possibly lined internally with a sound-absorbing material such as, for example, open-cell foam. The use of porous tubular sections allows the entry of air to be filtered along these sections also, allowing a distribution of the incoming air flow over the entire filtering surface provided by the filtration device.

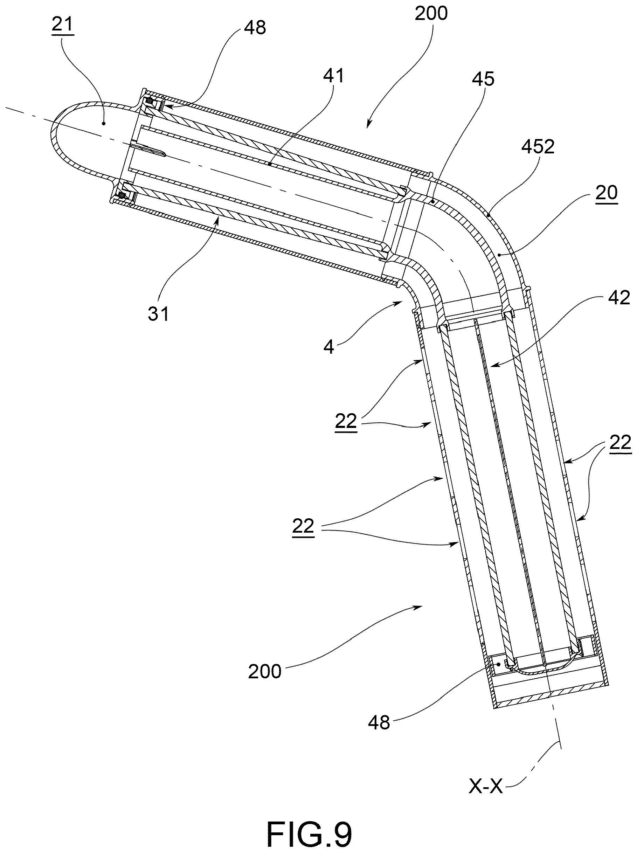

According to a preferred embodiment, the tubular sections 200 could include laterally placed inlet openings (that is radially with respect to the main axis X-X) with respect to the lateral surfaces of the tubular filters (as shown by way of non-limiting example in Figure 9).

According to a preferred embodiment, the suction manifold could comprise a first inlet mouth in a distal position and/or one or more inlet openings made on a tubular section or both.

According to the present invention, the suction manifold 2 defines with its walls an air filtration chamber 20, in which the dirty air drawn in from the environment flows towards the outlet mouth 21. In particular, air is filtered inside said air filtration chamber 20 in such a way that clean air flows to the outlet mouth 21.

According to the present invention, in fact, the air filtration device 1 comprises at least two tubular filters 3 arranged in series along said main axis X-X housed inside said suction manifold 2, in the filtration chamber 20.

In particular, the two tubular filters 3 comprise a first tubular filter 31 positioned proximal to the first end and proximal to the outlet mouth 21 and a second tubular filter 32 positioned proximal to the second end, preferably, but not necessarily, proximal to the inlet mouth 22. In other words, along the main axis X-X, in the filtration chamber 20, the two tubular filters 31, 32 are arranged in series.

According to a preferred embodiment, the air filtration device 1 comprises at least an intermediate tubular filter 33 interposed between the first tubular filter 31 and the second tubular filter 32.

According to a preferred embodiment, the tubular filters 31, 32, 33 have a cylindrical shape.

According to further embodiments, the tubular filters 31, 32, 33 have a conical shape.

According to the present invention, each tubular filter 31, 32, 33 is crossable by the air from the outside to the inside, respectively comprising, centrally, an inner cavity defined by an inner wall: the first tubular filter 31 comprises a first inner cavity 310 defined by a first inner wall 311; the second tubular filter 32 comprises a second inner cavity 320 defined by a second inner wall 321; the intermediate tubular filter 33 comprises an intermediate inner cavity 330 defined by an intermediate inner wall 331.

According to a preferred embodiment, each tubular filter is made of non-woven material in fibres interwoven with each other which is producible using melt-blown and with synthetic fibres, such as polypropylene, or alternatively the tubular filter may be of a pleated septum type consisting of a non-woven fabric with cellulose fibres and/or synthetic fibres and/or glass fibres.

According the invention, the tubular filters 31, 32, 33 are joined in series, but as amply described below, they filter the air by operating in parallel.

According to the present invention, the air filtering device 1 further comprises support means 4 supporting the tubular filters 3 in the suction manifold 2. In particular, the support means 4 have a dual function: firstly to provide a mechanical support for the tubular filters 3 to support them to the suction manifold 2; secondly to operate with the tubular filters 3 to make them work in such a way that the air is filtered through them in parallel.

Preferably, the support means 4 are also suitable for connecting in series two consecutive tubular filters along the main axis X-X.

In particular, the support means 4 comprise at least one connection element 45 which mechanically supports two consecutive tubular filters. Preferably, the connection element 45 fluidically connects the first inner cavity 310 with the second inner cavity 320.

For example, in the embodiment comprising at least one intermediate tubular filter 33 the support means 4 comprise a first connection element 45' which mechanically and fluidically supports the intermediate tubular filter 33 with the first tubular filter 31 and a second connection element 45" which mechanically and fluidically supports the intermediate tubular filter 33 with the second tubular filter 32.

According to a preferred embodiment, the connection element has special portions (for example annular portions and/or perforated end plates) engaged to the tubular filters (in particular to the respective filter media) to perform the mutual engagement.

According to a preferred embodiment, moreover, the connection element 45 is also suitable for connecting said different linear sections by fluidly connecting the suction manifold tubular sections 200 which extend along different linear sections of the main axis X-X. Preferably, in fact, the connection element 45 is also suitable for connecting two suction manifold tubular sections 200 comprising a manifold connection wall 452. In other words, the manifold connection wall 452 in turn defines the air filtration chamber 20.

The support means 4 further comprise a partialization device 41 housed in the first inner cavity 310 suitable to create an obstacle to the flow of clean air flowing inside said first inner cavity 310 in such a way as to favour the flow of air through the second tubular filter 32 and thus through the second inner cavity 320.

According to a preferred embodiment, the support means 4 comprise a second partialization device 42 housed in the second inner cavity 320 of the second tubular filter 32. The second partialization device 42 creates an obstacle to the flow of clean air flowing inside said second inner cavity 320 inferior to the obstacle which the first partitioning device 41 creates in the first inner cavity 310.

According to a preferred embodiment which also comprises the intermediate tubular filters 33, the support means comprise an intermediate partialization device 43 housed in the intermediate inner cavity 330 suitable to create an obstacle to the flow of clean air flowing inside said intermediate cavity 330 in such a way as to favour the flow of air through the second tubular filter 32 and thus through the second inner cavity 320.

According to the present invention, the partialization devices affect the flow of air which flows from the outside to the inside, so that inside the tubular filters placed in a more proximal position to the outlet mouth 21 there is a greater obstacle compared to the tubular filters placed in a more distal position from the outlet mouth 21 (that is in an area preferably more proximal to the inlet mouth 22). This way the flow of air aspirated into the suction manifold 2 is not exclusively concentrated in the areas of the filtering surface adjacent to or near the outlet mouth 21 (that is it avoids concentrating them in the proximity of the first tubular filter 31 only). The partialization devices are therefore suitable to encourage the suction, in parallel, through each tubular filter (that is also through the second tubular filter 32, or also through the intermediate tubular filter 33 and the second tubular filter 32). In other words, the partialization devices increase the pressure drop of the air through the tubular filter they lie in so as to favour an inflow of air that flows in parallel with the tubular filter arranged in an adjacent geometric position.

According to a preferred embodiment, the partialization device is of the type suitable to occupy a portion of the volume of the respective central cavity.

According to a preferred embodiment, the partialization device is of the type suitable to perform a calibrated transit of air inside it.

According to other embodiments, the partialization device combines the two aforementioned partialization methods, occupying a portion of the volume of the central cavity and forcing the air to flow through calibrated passages.

According to a preferred embodiment, each partialization device 41, 42, 43 comprises a partialization wall 411, 421, 431 which extends in length and occupies the respective central cavity 310, 320, 330.

In other words, the partialization wall 411, 421, 431 defines a suction channel 410, 420, 430 in which the clean air aspirated through the respective tubular filter 31, 32, 33, flows.

According to a preferred embodiment, the partialization wall 411, 421, 431 comprises an inlet portion 411', 421', 431' which engages the respective inner wall 311, 321, 331 and an outlet portion 411", 421", 431" distal from the respective inner wall 311, 321, 331.

According to a preferred embodiment, the partialization wall 411, 421, 431 comprises an inlet portion 411', 421', 431' which mechanically and fluidically engages the adjacent connection element so as to connect the tubular filter which said partialization wall 411, 421, 431 is installed in and the tubular filter adjacent to it.

Preferably, the partialization device 41, 43 comprises centrally an outlet passage 416, 436.

Said outlet passage 416, 436 is separated from the suction channel 410, 430 by the partialization wall 411, 421, 431.

According to a preferred embodiment, in said outlet passage 416, 436 the clean air filtered by the adjacent tubular filter 32, 33 flows towards the outlet.

In other words, in the inner cavity 310, 330, and in particular in the outlet passage 416, 436 defined by the respective partialization device 41, 43, the air filtered by the adjacent tubular filter 330, 320 flows.

In a preferred embodiment, the suction channel 410, 420, 430 is substantially tubular, facing the respective inner wall 311, 321, 331.

According to a preferred embodiment, the suction channel 410, 420, 430 is substantially conical with a through cross-section which increases along the respective inner wall towards the outlet mouth.

According to a preferred embodiment, said conical geometry of the suction channel 410, 420, 430 is obtained with a cylindrical tubular filter and a conical partialization wall (flared towards the inlet mouth) or with a tubular filter of a conical shape and a cylindrical partialization wall.

According to a preferred embodiment, the partialization device 41, 43 comprises a partialization element 415, 435.

Preferably, the partialization element 415, 435 is positioned in the inner cavity 310, 330 in a position proximal to the outlet of the respective inner cavity 310, 330.

According to a preferred embodiment, the partialization element 415, 435 has a main extension substantially planar in a direction perpendicular to the main axis X-X.

According to a preferred embodiment, the partialization element 415, 435 has calibrated air passages.

In other words, the partialization element 415, 435 forces the aspirated air to flow through specific calibrated air passages, obstructing the flow.

According to the present invention, the partialization element 415, 435 is housed in the suction channel 410, 430 in its outlet portion 411", 421", 431", having a substantially annular shape.

According to a preferred embodiment, the partialization element 415, 435 is of the type comprising a porous body, for example made of fibrous material.

According to a further preferred embodiment, the partialization element 415, 435 is of the type comprising a perforated planar body.

According to a further preferred embodiment, the partialization element 415, 435 is of the type comprising a perforated body with a mechanically adjustable or electrically controlled through section. In other words, a through section and therefore a desired resistance is defined mechanically or electrically.

According to a preferred embodiment, the partialization element 415, 435 is supported and at least partially housed in the connection element 45, 45', 45".

In the preferred embodiment in which the main axis X-X extends in several directions, identifying different linear sections, the connection element 45 is suitable to connect said different linear sections. Preferably, according to the above description, each tubular filter with the respective partialization devices is positioned along a respective linear section. Preferably, each tubular filter with the respective partialization devices is positioned inside a respective suction manifold tubular section 20.

According to a preferred embodiment, the support means 4 further comprise annular support members 48 suitable to support the respective tubular filters to the suction manifold 2 operating at the respective end portions of said tubular filters.

The present invention also relates to an air suction system of a vehicle engine comprising a suction system duct fluidically connected to the vehicle engine and an air filtration device 1 in turn object of the present invention, according to the above description.

In addition, the present invention also relates to a suction method of air filtered by an air suction system of a vehicle engine using an air filtration device according to the description. Said suction method comprises the step of:
- aspirating the air from the external environment by suction and filtering it in parallel through each tubular air filter arranged along the main axis X-X.

Innovatively, the air filtration device, the air suction system and suction method of filtered air according to the present invention amply fulfil the aforementioned purpose overcoming the drawbacks typical of the prior art.

Advantageously, the air filtration device has a high filtering surface thanks to the arrangement in series of the tubular filters, efficiently exploited for the filtration of the air thanks to the presence of the filtration devices which perform suction in parallel.

Advantageously, the filtering of the air exclusively in the proximal portions at the outlet mouth of the suction manifold is avoided. Advantageously, the accelerated wear of such portions is avoided.

Advantageously, the exploitation of the space in the engine compartment is optimized. In fact, advantageously, the need to provide for suction and filtration box-shaped bodies specifically designed to house filtering elements is obviated. Advantageously, the filtration device is insertable in longitudinal spaces or spaces having longitudinal sections present in the engine compartment. Advantageously, the exploitation of space in the engine compartment is particularly optimized, particularly in the case of hybrid powered vehicles.

Advantageously, the tubular filter does not require a further support element.

Moreover, advantageously the tubular filter is insertable (and lockable) or extractable (and unlockable) by means of simple and intuitive operations.

Moreover, advantageously, the air filtration device also solves the problem related to the acoustic pollution of the engine. In fact, the axial arrangement along a main axis with different linear sections and/or the presence of support means which comprise a partialization device prevent the return of engine noise towards the environment through the suction system, interrupting the sound waves emitted by the engine through the suction system.

Advantageously, the air filtration device makes it possible to minimize the acoustic emissions of the engine and its overall dimensions thanks to the installation of the filtration device in a suction duct comprising portions made of sound-absorbent material.

In addition, innovatively, the aforementioned advantages can be seen and achieved using the suction method of filtered air described above.

It is clear that a person skilled in the art may make modifications to the air filtration device and the air suction system described above so as to satisfy contingent requirements, all contained within the scope of protection as defined by the following claims.

### List of reference numbers:

1 air filtration device
2 suction manifold
21 outlet mouth
22 inlet mouth
20 air filtration chamber
200 manifold tubular sections
3 tubular filters
31 first tubular filter
310 first inner cavity
311 first inner wall
32 second tubular filter
320 second inner cavity
321 second inner wall
33 intermediate tubular filter
330 intermediate inner cavity
331 intermediate inner wall
4 support means
41 partialization device
410 suction channel
411 partialization wall
411' inlet portion
411" outlet portion
415 partialization element
416 outlet passage
42 second partialization device
420 second suction channel
421 second partialization wall
421' second inlet portion
421" second outlet portion
43 intermediate partialization device
430 intermediate suction channel
431 intermediate partialization wall
431' intermediate inlet portion
431" intermediate outlet portion
435 intermediate partialization element
436 intermediate outlet passage
45 connection element
45' first connection element
45" second connection element
452, 452', 452" manifold connection wall
X-X main axis

## Claims

1. An air filtration device (1) of an air suction system of a vehicle engine, comprising:
- a suction manifold (2) extending in length along a main axis (X-X) between a first end comprising an outlet mouth (21) fluidically connected to the air suction system, and a second end, for example comprising an inlet mouth (22);
- at least two tubular filters (3) housed inside said suction manifold (2), arranged along the main axis (X-X), comprising a first tubular filter (31) positioned proximally to the first end, that is to the outlet mouth (21), and a second tubular filter (32) positioned proximal to the second end, wherein each tubular filter (31, 32) is traversable by the air from the outside to the inside filtering the air by operating in parallel, respectively comprising centrally a first inner cavity (310) defined by a first inner wall (311) of the first tubular filter (31) and a second inner cavity (320) defined by a second inner wall (321) of the second tubular filter (32);
- support means (4) supporting the tubular filters (3) in the suction manifold (2) comprising:
i) at least one connection element (45) for the connection in series of two consecutive tubular filters; wherein the air filtration device (1) is **characterized by** the fact that the support means (4) also comprise:
ii) a partialization device (41) housed in the first inner cavity (310) to create an obstacle to the flow of air flowing inside said first inner cavity (310) in such a way as to favour the flow of air through the second tubular filter (32) and thus through the second inner cavity (320).

2. Air filtration device (1) according to claim 1, wherein the support means (4) comprise a second partialization device (42) housed in the second inner cavity (320) of the second tubular filter (32), wherein the second partialization device (42) creates an obstacle to the flow of air flowing inside said second inner cavity (320) inferior to the obstacle which the first partialization device (41) creates in the first inner cavity (310).

3. Air filtration device (1) according to any of the preceding claims, comprising at least one intermediate tubular filter (33) positioned along the main axis (X-X) between the first tubular filter (31) and the second tubular filter (32), which is crossable by the air from the outside to the inside, centrally comprising an intermediate inner cavity (330) defined by an intermediate inner wall (331), wherein the support means (4) comprise:
- a first connection element (45') connecting the intermediate tubular filter (33) to the first tubular filter (31);
- a second connection element (45") connecting the intermediate tubular filter (33) to the second tubular filter (32).

4. Air filtration device (1) according to claim 3, wherein the support means (4) comprise an intermediate partialization device (43) housed in the intermediate inner cavity (330) to create an obstacle to the flow of air flowing inside said intermediate inner cavity (330) in such a way as to favour the flow of air through the second tubular filter (32) and thus through the second inner cavity (320).

5. Air filtration device (1) according to any of the preceding claims, wherein the partialization device (41, 42, 43) comprises a partialization wall (411, 421, 431) that extend in length occupying the respective central cavity (310, 320, 330) comprising an inlet portion (411', 421', 431') engaging the respective inner wall (311, 321, 331) or the connection element and an outlet portion (411", 421", 431") distal from the respective inner wall (311, 321, 331), defining a suction channel (410, 420, 430) in which the clean air aspirated through the respective tubular filter (31, 32, 33) flows.

6. Air filtration device (1) according to claim 5, wherein the partialization device (41, 43) comprises centrally an outlet passage (416, 436), separated from the suction channel (410, 430) by the partialization wall (411, 421, 431), wherein the air filtered by the adjacent tubular filter (32, 33) flows towards the outlet through the outlet passage (416, 436).

7. Air filtration device (1) according to any of the preceding claims, wherein the partialization device (41, 43) comprises a partialization element (415, 435) positioned in the inner cavity (310, 330) in a position proximal to the outlet of the respective inner cavity (310,330), wherein said partialization element (415, 435) has a substantially planar extension in a direction orthogonal to the main axis (X-X), presenting calibrated air passages.

8. Air filtration device (1) according to claim 7, in combination with one of the claims 5 or 6, wherein the partialization element (415, 435) is housed in the suction channel (410, 430) in its outlet portion (411", 421", 431"), having a substantially annular shape.

9. Air filtration device (1) according to claim 7 or 8, wherein the partialization element (415, 435) is of the type comprising a porous body, for example made of fibrous material, or is of the type comprising a perforated planar body.

10. Air filtration device (1) according to any of the claims from 7 to 9, wherein the partialization element (415, 435) is supported and at least partially housed in the connection element (45).

11. Air filtration device (1) according to any of the preceding claims, wherein the main axis (X-X) extends along a single direction, that is along a single straight line.

12. Air filtration device (1) according to any of the claims from 1 to 10, wherein the main axis (X-X) extends in several directions, identifying different linear sections, wherein the connection element (45) is suitable to connect said different linear sections.

13. Air filtration device (1) according to claim 12, wherein each tubular filter is positioned along a respective linear section, wherein the suction manifold (2) also comprises respective manifold sections (200) which house the respective tubular filter.

14. An air suction system of a vehicle engine comprising a suction duct system fluidically connected to the vehicle engine and an air filtration device (1), according to any one of the preceding claims, fluidically connected to said system suction duct, wherein the air from the external environment is aspirated through the air filtration device (1) and is cleaned of any suspended particles to then flow in said system suction duct.

15. Suction method of filtered air of an air suction system of a vehicle engine through an air filtration device according to any one of the claims from 1 to 13, comprising the step of:
- aspirating the air from the external environment by suction and filtering it in parallel through each tubular air filter arranged along the main axis (X-X).

## Patentansprüche

1. Luftfiltrationsvorrichtung (1) eines Luftansaugsystems eines Fahrzeugmotors, umfassend:
- einen Ansaugkrümmer (2), der sich längenmäßig entlang einer Hauptachse (X-X) zwischen einem ersten Ende, das eine Auslassmündung (21) umfasst, die fluidisch mit dem Luftansaugsystem verbunden ist, und einem zweiten Ende erstreckt, das beispielsweise eine Einlassmündung (22) umfasst,
- zumindest zwei rohrförmige Filter (3), die innerhalb des Ansaugkrümmers (2) untergebracht sind, und zwar angeordnet entlang der Hauptachse (X-X), umfassend einen ersten rohrförmigen Filter (31), der proximal zu dem ersten Ende, d. h. zu der Auslassmündung (21), positioniert ist, und einen zweiten rohrförmigen Filter (32), der proximal zu dem zweiten Ende positioniert ist, wobei jeder rohrförmige Filter (31, 32) von der Luft von außen nach innen durchströmbar ist und die Luft filtert, indem sie parallel arbeiten, wobei sie mittig bzw. zentral einen ersten inneren Hohlraum (310), der durch eine erste Innenwand (311) des ersten rohrförmigen Filters (31) definiert ist, bzw. einen zweiten inneren Hohlraum (320) umfassen, der durch eine zweite Innenwand (321) des zweiten rohrförmigen Filters (32) definiert ist,
- Stütz- bzw. Trägermittel (4) zum Stützen bzw. Tragen der rohrförmigen Filter (3) in dem Ansaugkrümmer (2), umfassend:
i) zumindest ein Verbindungselement (45) zur Reihenverbindung bzw. -schaltung zweier aufeinanderfolgender rohrförmiger Filter;
wobei die Luftfiltrationsvorrichtung (1) **dadurch gekennzeichnet ist, dass** die Trägermittel (4) zudem umfassen:
ii) eine Teilungsvorrichtung (41), die in dem ersten inneren Hohlraum (310) untergebracht ist, um ein Hindernis für den Luftstrom zu erzeugen, der innerhalb des ersten inneren Hohlraums (310) strömt, und zwar derart, dass der Luftstrom durch den zweiten rohrförmigen Filter (32) und somit durch den zweiten inneren Hohlraum (320) begünstigt wird.

2. Luftfiltrationsvorrichtung (1) nach Anspruch 1, wobei die Trägermittel (4) eine zweite Teilungsvorrichtung (42) umfassen, die in dem zweiten inneren Hohlraum (320) des zweiten rohrförmigen Filters (32) untergebracht ist, wobei die zweite Teilungsvorrichtung (42) ein Hindernis für den Luftstrom erzeugt, der innerhalb des zweiten inneren Hohlraums (320) strömt, und zwar unterhalb des Hindernisses, das die erste Teilungsvorrichtung (41) in dem ersten inneren Hohlraum (310) erzeugt.

3. Luftfiltrationsvorrichtung (1) nach einem der vorhergehenden Ansprüche, umfassend zumindest einen rohrförmigen Zwischenfilter (33), der entlang der Hauptachse (X-X) zwischen dem ersten rohrförmigen Filter (31) und dem zweiten rohrförmigen Filter (32) positioniert ist, durch den Luft von außen nach innen verlaufen kann, wobei er mittig bzw. zentral einen inneren Zwischenhohlraum (330) umfasst, der durch eine innere Zwischenwand (331) definiert ist, wobei die Trägermittel (4) umfassen:
- ein erstes Verbindungselement (45'), das den rohrförmigen Zwischenfilter (33) mit dem ersten rohrförmigen Filter (31) verbindet;
- ein zweites Verbindungselement (45"), das den rohrförmigen Zwischenfilter (33) mit dem zweiten rohrförmigen Filter (32) verbindet.

4. Luftfiltrationsvorrichtung (1) nach Anspruch 3, wobei die Trägermittel (4) eine Zwischenteilungsvorrichtung (43) umfassen, die in dem inneren Zwischenhohlraum (330) untergebracht ist, um ein Hindernis für den Luftstrom zu erzeugen, der innerhalb des inneren Zwischenhohlraums (330) strömt, und zwar derart, dass der Luftstrom durch den zweiten rohrförmigen Filter (32) und somit durch den zweiten inneren Hohlraum (320) begünstigt wird.

5. Luftfiltrationsvorrichtung (1) nach einem der vorhergehenden Ansprüche, wobei die Teilungsvorrichtung (41, 42, 43) eine Teilungswand (411, 421, 431) umfasst, die sich längenmäßig erstreckt und den jeweiligen zentralen Hohlraum (310, 320, 330) einnimmt, umfassend einen Einlassabschnitt (411', 421', 431'), der in die jeweilige Innenwand (311,321,331) oder das Verbindungselement eingreift, und einen Auslassabschnitt (411", 421", 431") distal von der jeweiligen Innenwand (311, 321, 331), der einen Saugkanal (410, 420, 430) definiert, in dem die durch den jeweiligen Rohrfilter (31, 32, 33) angesaugte saubere Luft strömt.

6. Luftfiltrationsvorrichtung (1) nach Anspruch 5, wobei die Teilungsvorrichtung (41, 43) mittig bzw. zentral einen Auslasstrakt (416, 436) umfasst, getrennt von dem Saugkanal (410, 430) durch die Teilungswand (411, 421, 431), wobei die durch den benachbarten bzw. angrenzenden rohrförmigen Filter (32, 33) gefilterte Luft durch den Auslasstrakt (416, 436) zu dem Auslass strömt.

7. Luftfiltrationsvorrichtung (1) nach einem der vorhergehenden Ansprüche, wobei die Teilungsvorrichtung (41, 43) ein Teilungselement (415, 435) umfasst, das in dem inneren Hohlraum (310, 330) in einer Position proximal zu dem Auslass des jeweiligen inneren Hohlraums (310, 330) positioniert ist, wobei das Teilungselement (415, 435) eine im Wesentlichen planare Erstreckung in einer Richtung orthogonal zu der Hauptachse (X-X) aufweist, was kalibrierte Luftdurchgänge darstellt.

8. Luftfiltrationsvorrichtung (1) nach Anspruch 7 in Kombination mit einem der Ansprüche 5 oder 6, wobei das Teilungselement (415, 435) in dem Saugkanal (410, 430) in seinem Auslassabschnitt (411", 421", 431") untergebracht ist, und zwar mit einer im Wesentlichen ringförmigen Form.

9. Luftfiltrationsvorrichtung (1) nach Anspruch 7 oder 8, **dadurch gekennzeichnet, dass** das Teilungselement (415, 435) von dem Typ ist, der einen porösen Körper, beispielsweise aus Fasermaterial, umfasst, oder von dem Typ ist, der einen perforierten planaren Körper umfasst.

10. Luftfiltrationsvorrichtung (1) nach einem der Ansprüche 7 bis 9, wobei das Teilungselement (415, 435) in dem Verbindungselement (45) gestützt bzw. getragen ist und zumindest teilweise darin untergebracht ist.

11. Luftfiltrationsvorrichtung (1) nach einem der vorhergehenden Ansprüche, wobei sich die Hauptachse (X-X) entlang einer einzigen Richtung erstreckt, das heißt entlang einer einzigen geraden Linie.

12. Luftfiltrationsvorrichtung (1) nach einem der Ansprüche 1 bis 10, wobei sich die Hauptachse (X-X) in mehrere Richtungen erstreckt, die unterschiedliche lineare Abschnitte identifizieren, wobei das Verbindungselement (45) geeignet ist, die unterschiedlichen linearen Abschnitte zu verbinden.

13. Luftfiltrationsvorrichtung (1) nach Anspruch 12, wobei jeder rohrförmige Filter entlang eines jeweiligen linearen Abschnitts positioniert ist, wobei der Ansaugkrümmer (2) zudem jeweilige Krümmerabschnitte (200) umfasst, die den jeweiligen rohrförmigen Filter beherbergen.

14. Luftansaugsystem eines Fahrzeugmotors, umfassend ein Ansaugleitungssystem, das mit dem Fahrzeugmotor fluidisch verbunden ist, und eine Luftfiltrationsvorrichtung (1) nach einem der vorhergehenden Ansprüche, die mit der Systemansaugleitung fluidisch verbunden ist, wobei die Luft aus der äußeren Umgebung durch die Luftfiltrationsvorrichtung (1) angesaugt und von jeglichen Schwebeteilchen gereinigt wird, um dann in die Systemansaugleitung zu strömen.

15. Ansaugverfahren für gefilterte Luft eines Luftansaugsystems eines Fahrzeugmotors durch eine Luftfiltrationsvorrichtung nach einem der Ansprüche 1 bis 13, umfassend den Schritt:
- Ansaugen der Luft aus der äußeren Umgebung durch Ansaugen und Filtern derselben parallel durch jeden rohrförmigen Luftfilter, die entlang der Hauptachse (X-X) angeordnet sind.

## Revendications

1. Dispositif de filtration d'air (1) d'un système d'aspiration d'air d'un moteur de véhicule, comprenant :
- un collecteur d'aspiration (2) s'étendant en longueur le long d'un axe principal (X-X) entre une première extrémité comprenant une embouchure de sortie (21) reliée fluidiquement au système d'aspiration d'air, et une deuxième extrémité, comprenant par exemple une embouchure d'entrée (22) ;
- au moins deux filtres tubulaires (3) logés à l'intérieur dudit collecteur d'aspiration (2), agencés le long de l'axe principal (X-X), comprenant un premier filtre tubulaire (31) positionné de manière proximale par rapport à la première extrémité, c'est-à-dire par rapport à l'embouchure de sortie (21), et un deuxième filtre tubulaire (32) positionné de manière proximale par rapport à la deuxième extrémité, dans lequel chaque filtre tubulaire (31, 32) peut être traversé par l'air de l'extérieur vers l'intérieur filtrant l'air en fonctionnant en parallèle, comprenant respectivement de manière centrale une première cavité intérieure (310) définie par une première paroi intérieure (311) du premier filtre tubulaire (31) et une deuxième cavité intérieure (320) définie par une deuxième paroi intérieure (321) du deuxième filtre tubulaire (32) ;
- des moyens de support (4) supportant les filtres tubulaires (3) dans le collecteur d'aspiration (2) comprenant :
i) au moins un élément de raccordement (45) pour le raccordement en série de deux filtres tubulaires consécutifs ;
dans lequel le dispositif de filtration d'air (1) est **caractérisé par le fait que** les moyens de support (4) comprennent également :
ii) un dispositif de partialisation (41) logé dans la première cavité intérieure (310) pour créer un obstacle à l'écoulement d'air s'écoulant à l'intérieur de ladite première cavité intérieure (310) de manière à favoriser l'écoulement d'air à travers le deuxième filtre tubulaire (32) et ainsi à travers la deuxième cavité intérieure (320).

2. Dispositif de filtration d'air (1) selon la revendication 1, dans lequel les moyens de support (4) comprennent un deuxième dispositif de partialisation (42) logé dans la deuxième cavité intérieure (320) du deuxième filtre tubulaire (32), dans lequel le deuxième dispositif de partialisation (42) crée un obstacle à l'écoulement d'air s'écoulant à l'intérieur de ladite deuxième cavité intérieure (320) inférieur à l'obstacle que le premier dispositif de partialisation (41) crée dans la première cavité intérieure (310).

3. Dispositif de filtration d'air (1) selon l'une quelconque des revendications précédentes, comprenant au moins un filtre tubulaire intermédiaire (33) positionné le long de l'axe principal (X-X) entre le premier filtre tubulaire (31) et le deuxième filtre tubulaire (32), qui peut être traversé par l'air de l'extérieur vers l'intérieur, comprenant de manière centrale une cavité intérieure intermédiaire (330) définie par une paroi intérieure intermédiaire (331), dans lequel les moyens de support (4) comprennent :
- un premier élément de raccordement (45') raccordant le filtre tubulaire intermédiaire (33) au premier filtre tubulaire (31) ;
- un deuxième élément de raccordement (45") raccordant le filtre tubulaire intermédiaire (33) au deuxième filtre tubulaire (32).

4. Dispositif de filtration d'air (1) selon la revendication 3, dans lequel les moyens de support (4) comprennent un dispositif de partialisation intermédiaire (43) logé dans la cavité intérieure intermédiaire (330) pour créer un obstacle à l'écoulement d'air s'écoulant à l'intérieur de ladite cavité intérieure intermédiaire (330) de manière à favoriser l'écoulement d'air à travers le deuxième filtre tubulaire (32) et ainsi à travers la deuxième cavité intérieure (320).

5. Dispositif de filtration d'air (1) selon l'une quelconque des revendications précédentes, dans lequel le dispositif de partialisation (41, 42, 43) comprend une paroi de partialisation (411, 421, 431) qui s'étend en longueur occupant la cavité centrale (310, 320, 330) respective comprenant une partie d'entrée (411', 421', 431') en prise avec la paroi intérieure (311, 321, 331) respective ou l'élément de raccordement et une partie de sortie (411", 421", 431") distale par rapport à la paroi intérieure (311, 321, 331) respective, définissant un canal d'aspiration (410, 420, 430) dans lequel l'air propre aspiré à travers le filtre tubulaire (31, 32, 33) respectif s'écoule.

6. Dispositif de filtration d'air (1) selon la revendication 5, dans lequel le dispositif de partialisation (41, 43) comprend de manière centrale un passage de sortie (416, 436), séparé du canal d'aspiration (410, 430) par la paroi de partialisation (411, 421, 431), dans lequel l'air filtré par le filtre tubulaire (32, 33) adjacent s'écoule en direction de la sortie à travers le passage de sortie (416, 436).

7. Dispositif de filtration d'air (1) selon l'une quelconque des revendications précédentes, dans lequel le dispositif de partialisation (41, 43) comprend un élément de partialisation (415, 435) positionné dans la cavité intérieure (310, 330) dans une position proximale par rapport à la sortie de la cavité intérieure (310, 330) respective, dans lequel ledit élément de partialisation (415, 435) présente une extension sensiblement plane dans une direction perpendiculaire à l'axe principal (X-X), présentant des passages d'air calibrés.

8. Dispositif de filtration d'air (1) selon la revendication 7, en combinaison avec une des revendications 5 ou 6, dans lequel l'élément de partialisation (415, 435) est logé dans le canal d'aspiration (410, 430) dans sa partie de sortie (411", 421", 431"), présentant une forme sensiblement annulaire.

9. Dispositif de filtration d'air (1) selon la revendication 7 ou 8, dans lequel l'élément de partialisation (415, 435) est du type comprenant un corps poreux, par exemple composé d'un matériau fibreux, ou est du type comprenant un corps plan perforé.

10. Dispositif de filtration d'air (1) selon l'une quelconque des revendications 7 à 9, dans lequel l'élément de partialisation (415, 435) est supporté et logé au moins en partie dans l'élément de raccordement (45).

11. Dispositif de filtration d'air (1) selon l'une quelconque des revendications précédentes, dans lequel l'axe principal (X-X) s'étend le long d'une seule direction, qui est le long d'une seule ligne droite.

12. Dispositif de filtration d'air (1) selon l'une quelconque des revendications 1 à 10, dans lequel l'axe principal (X-X) s'étend dans plusieurs directions, identifiant différentes sections linéaires, dans lequel l'élément de raccordement (45) est adapté à raccorder différentes sections linéaires.

13. Dispositif de filtration d'air (1) selon la revendication 12, dans lequel chaque filtre tubulaire est positionné le long d'une section linéaire respective, dans lequel le collecteur d'aspiration (2) comprend également des sections de collecteur (200) respectives qui logent le filtre tubulaire respectif.

14. Système d'aspiration d'air d'un moteur de véhicule comprenant un système de conduit d'aspiration relié fluidiquement au moteur de véhicule et un dispositif de filtration d'air (1), selon l'une quelconque des revendications précédentes, relié fluidiquement audit système de conduit d'aspiration, dans lequel l'air provenant de l'environnement externe est aspiré à travers le dispositif de filtration d'air (1) et est nettoyé de toute particule en suspension pour s'écouler ensuite dans ledit système de conduit d'aspiration.

15. Procédé d'aspiration d'air filtré d'un système d'aspiration d'air d'un moteur de véhicule à travers un dispositif de filtration d'air selon l'une quelconque des revendications 1 à 13, comprenant l'étape de :
- aspiration de l'air de l'environnement externe par aspiration et filtration de celui-ci en parallèle à travers chaque filtre à air tubulaire agencé le long de l'axe principal (X-X).
